# EUROPÄISCHE PATENTSCHRIFT

(11) **EP 2 219 879 B1**
(45) Veröffentlichungstag und Bekanntmachung des Hinweises auf die Patenterteilung: **10.09.2014**
(21) Anmeldenummer: 08849928.0
(22) Anmeldetag: 05.11.2008
(51) Int. Cl.: B42D 25/00

(54) **DOKUMENT MIT EINER INTEGRIERTEN ANZEIGEVORRICHTUNG**
DOCUMENT HAVING AN INTEGRATED DISPLAY DEVICE
DOCUMENT AVEC UN DISPOSITIF D'AFFICHAGE INTÉGRÉ

(30) Priorität: 12.11.2007 DE 102007000880
(43) Veröffentlichungstag der Anmeldung: 25.08.2010
(73) Patentinhaber: Bundesdruckerei GmbH, 10958 Berlin (DE)
(72) Erfinder: MATHEA, Arthur, 14199 Berlin (DE); FRITZE, Frank, 12487 Berlin (DE); FISCHER, Jörg, 13053 Berlin (DE); PAESCHKE, Manfred, 16348 Wandlitz (DE); PFLUGHOEFFT, Malte, 13347 Berlin (DE); MUTH, Oliver, 12277 Berlin (DE)
(74) Vertreter: Richardt Patentanwälte PartG mbB
(86) Internationale Anmeldenummer: PCT/EP2008/064984
(87) Internationale Veröffentlichungsnummer: WO 2009/062869

(56) Entgegenhaltungen:
- EP-A- 1 341 121
- WO-A-2006/061171
- DE-A1- 10 109 126
- DE-A1- 19 904 686
- DE-A1-102005 025 806
- DE-A1-102005 030 626
- DE-A1-102005 030 628
- DE-U1- 29 615 926
- DE-U1-202005 007 342
- US-A1- 2005 161 501

## Beschreibung

Die vorliegende Erfindung betrifft ein Dokument mit einer integrierten Anzeigevorrichtung, insbesondere ein Wert- oder Sicherheitsdokument, und ein Lesegerät für ein solches Dokument.

Aus dem Stand der Technik sind bereits Chipkarten mit integrierter Anzeigevorrichtung bekannt. Die US 6,068,183 zeigt ein Chipkartensystem, das eine Anzeigevorrichtung zur Wiedergabe von Werbeinformationen aufweist, wobei die Chipkarte die Werbeinformationen von einer Datenquelle empfangen kann.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1.

Dokument WO-A-2006/061171 offenbart ein Dokument nach dem Oberbegriff des Anspruchs 1.

Demgegenüber liegt der Erfindung die Aufgabe zugrunde, ein verbessertes Dokument mit einer integrierten Anzeigevorrichtung sowie ein Lesegerät für ein solches Dokument zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Ausführungsformen der Erfindung sind besonders vorteilhaft, da zum Beispiel Personalisierungsinformationen in dem Layout der Anzeigeelemente codiert werden können. Unter einem "Anzeigeelement" wird dabei insbesondere ein sogenannter Pixel verstanden. Bei den Personalisierungsinformationen kann es sich zum Beispiel um eine Seriennummer des Dokuments, Informationen der ausstellenden Einrichtung, Informationen zur Hardware beispielsweise Seriennummer elektronischer Bauteile des Dokumentes, persönliche Angaben zu dem Träger des Dokuments, eine Prüfsumme, Bilddaten, zum Beispiel ein Foto, und/oder einen kryptografischen Schlüssel handeln. Alternativ oder zusätzlich kann durch das Layout der Anzeigeelemente ein Sicherheitsmerkmal gegeben sein.

Mit Hilfe der über das Layout der Anzeigeelemente codierten Information kann die Anzeigevorrichtung des Dokuments authentifiziert werden. Dadurch ist ein Schutz gegen Manipulationen oder Fälschungen des Dokuments gegeben. Insbesondere kann ein erfindungsgemäßes Dokument nicht dadurch nachgebildet werden, dass eine handelsübliche Anzeigevorrichtung oder eine Anzeige aus einem anderen Dokument in einen Dokumentenkörper integriert wird.

Unter einem "Dokument" werden erfindungsgemäß Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Zutrittsausweise, Firmenausweise oder andere ID-Dokumente, sowie auch Chipkarten, Zahlungsmittel, insbesondere Bankkarten und Kreditkarten, Frachtbriefe und Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper tenkörper aus einem anderen Material haben, wie z.B. aus einem Verbundmaterial, wie er im Fahrzeugbau verwendet wird.

Nach einer Ausführungsform der Erfindung kann das Layout eine Variation der räumlichen Anordnung der Anzeigeelemente in der Ebene der Anzeigevorrichtung und/oder senkrecht dazu beinhalten, wodurch die Information codiert ist.

Die Anzeigevorrichtung ist matrixförmig ausgebildet. Durch Abweichungen der Anordnung der Anzeigeelemente von der Matrix ist die Information codiert.

Bei der in das Dokument integrierten Anzeigevorrichtung kann es sich z.B. um ein Aktiv- oder Passiv-Matrix-Display handeln. Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Nach einer Ausführungsform der Erfindung ist durch die Abweichungen der Anzeigeelemente von der Matrix ein Moire-Muster erzeugbar. Hierzu wird beispielsweise ein Linienraster oder ein anderes optisches Hilfsmittel auf die Anzeigevorrichtung gelegt, sodass das Moire-Muster sichtbar wird.

Nach einer Ausführungsform der Erfindung ist die Anzeigevorrichtung für eine farbige Wiedergabe ausgebildet. Jedes Bildelement der Anzeigevorrichtung, d.h. jeder Pixel, wird also durch zumindest drei verschiedenfarbige Anzeigeelemente gebildet, beispielsweise durch ein rostes, grünes und ein blaues Anzeigeelement für eine so genannte RGB-Anzeige. Die Reihenfolge der verschiedenfarbigen Anzeigeelemente wird variiert, um eine Information zu codieren.

Nach einer Ausführungsform der Erfindung beinhaltet das Layout eine Variation der Größe der Anzeigeelemente. Die maximale Leuchtkraft jedes der Anzeigeelemente kann je nach Größe unterschiedlich sein. Dies ist insbesondere dann der Fall, wenn es sich bei den Anzeigeelementen um organische Leuchtdioden (OLEDs) handelt. Zur Kompensation der unterschiedlichen Leuchtkraft der Anzeigeelemente aufgrund deren verschiedenen Größen erfolgt eine entsprechende Kompensation bei der Ansteuerung der Anzeigeelemente für eine korrekte Bildwiedergabe. Eine solche Kompensation kann dadurch erfolgen, dass unabhängig von der Größe eines Anzeigeelements jeweils ein konstanter Strom eingespeist wird. Alternativ hierzu kann diese Kompensation auf der Ebene der Bilddaten des wiederzugebenden Bildes erfolgen, indem diese Bilddaten entsprechend transformiert werden.

Unter Bilddaten" werden hier alle Daten verstanden, die zur Erzeugung einer Bildwiedergabe auf der Anzeigevorrichtung des Dokuments vorgesehen sind, also zum Beispiel Daten einer digitalen Fotografie, eines anzuzeigenden Textes oder einer anderen bildlichen, symbolischen oder alphanumerischen Information. Bei den Bilddaten kann es sich um ein Fahrzeugkennzeichen, insbesondere um ein amtlichen Kraftfahrzeugkennzeichen handeln, insbesondere wenn das Dokument als elektronisches Kraftfahrzeugkennzeichen ausgebildet ist.

Nach einer Ausführungsform der Erfindung beinhaltet das Layout eine Variation der geometrischen Formen der Anzeigeelemente. Diese Variation der geometrischen Formen kann beispielsweise dadurch realisiert werden, dass Teilbereiche von einigen der Anzeigeelemente mit Hilfe eines Lasers abgetragen werden. Hieraus resultierende Helligkeitsunterschiede der einzelnen Anzeigeelemente können wiederum auf der Basis der Ansteuerung der Anzeigevorrichtung oder mit Hilfe einer Transformation der Bilddaten kompensiert werden.

Nach einer Ausführungsform der Erfindung wird Information in dem Layout durch Gruppierung von zwei oder mehreren Anzeigeelementen zu jeweils einem Bildelement codiert. Eine solche Gruppierung kann dadurch erfolgen, dass zwei oder mehrere benachbarte Anzeigeelemente elektrisch miteinander verbunden werden. Wenn also eines dieser elektrisch miteinander verbundenen Anzeigeelemente angesteuert wird, so bedeutet dies, dass damit gleichzeitig auch die anderen Anzeigeelemente derselben Gruppe angesteuert werden.

Die elektrische Verbindung der benachbarten Anzeigeelemente kann durch einen Aufdruck erfolgen, wie zum Beispiel einen Aufdruck mit einem leitfähigen Polymer. Hierzu können Verfahren des Hoch-, Flach-, Tief-, Durch- oder Digitaldrucks verwendet werden.

Nach einer Ausführungsform der Erfindung weist das Layout eine Variation der Geometrie der Ansteuerungselemente der Anzeigeelemente auf, wie zum Beispiel der Ansteuerungselektroden. Beispielsweise werden Teilbereiche der Ansteuerungselektroden mittels eines Lasers abgetragen, um auf diese Art und Weise das Dokument zu individualisieren.

Nach einer Ausführungsform der Erfindung beinhaltet das Layout ein digitales Wasserzeichen, durch welches Information codiert ist.

Digitale Wasserzeichen sind an sich aus dem Stand der Technik bekannt und werden üblicherweise drucktechnisch auf ein Dokument aufgebracht, wie es zum Beispiel aus DE 199 00 856 C2, EP 0 490 457 B1 und EP 0 961 239 A3 an sich bekannt ist. Beispielsweise kann ein digitales Wasserzeichen durch Texturierung der Mikrotopologie der Oberfläche einer Banknote aufgebracht werden.

Nach Ausführungsformen der Erfindung werden solche an sich aus der Drucktechnik bekannten Verfahren zur Erzeugung digitaler Wasserzeichen auf das Layout einer Anzeigevorrichtung angewendet, indem deren Mikrotopologie hinsichtlich der Form, Größe und/oder Anordnung der einzelnen Anzeigeelemente je nach der einzubringenden Information variiert wird. Diese Variation kann im Bildraum oder im Frequenzraum erfolgen, wie es an sich ebenfalls aus dem Bereich drucktechnisch aufgebrachter Wasserzeichen bekannt ist.

In einer Ausführungsform der Erfindung weist das Layout des Dokuments einen Bereich auf, in dem keine Information codiert ist.

In einer Ausführungsform der Erfindung handelt es sich bei dem Dokument um ein elektronisches Kraftfahrzeugkennzeichen.

Nach einer Ausführungsform der Erfindung beinhaltet das Layout einen Barcode insbesondere einen eindimensionalen oder einen zweidimensionalen Barcode. Nach einer Ausführungsform der Erfindung erscheint der Barcode in einem Differenzbild. Dieses Differenzbild kann dadurch gewonnen werden, dass ein Standardlayout der Anzeigevorrichtung, welche keine Variationen aufweist, von dem von der Anzeigevorrichtung erfassten Layout abgezogen wird, sodass man das Differenzbild mit dem Barcode erhält.

Nach einer Ausführungsform der Erfindung ist die Variation des Layouts visuell durch einen Benutzer nicht erfassbar. Nach einer Ausführungsform der Erfindung ist die Variation des Layouts von einem Benutzer visuell wahrnehmbar, aber nicht kognitiv erfassbar.

Nach einer Ausführungsform der Erfindung ist die Information von einem Benutzer mit einem optischen Hilfsmittel von der Anzeigevorrichtung erfassbar, wie zum Beispiel mit Hilfe eines optischen Filters, eines Linienrasters oder dergleichen.

Nach einer Ausführungsform der Erfindung ist die Information von der Anzeigevorrichtung mit Hilfe eines optischen Sensors maschinell erfassbar.

Nach einer Ausführungsform der Erfindung ist die Information nur in einem Teilbereich des Layouts codiert, wohingegen der verbleibende Bereich des Layouts keine Variationen aufweist. Hierdurch ist ein weiteres Sicherheitsmerkmal gegeben, da ein Fälscher nicht wissen kann, welcher Teilbereich des Layouts die Variationen aufweisen soll.

Nach einer Ausführungsform der Erfindung handelt es sich bei der Information um einen kryptographischen Schlüssel. Beispielsweise beinhaltet das Dokument einen integrierten elektronischen Schaltkreis zur Speicherung von schutzbedürftigen Daten, insbesondere biometrischen Daten eines Trägers des Dokuments. Der integrierte elektronische Schaltkreis dient zur Ausführung eines kryptographischen Protokolls und hat eine Schnittstelle zu einem Lesegerät. Beispielsweise kann der integrierte elektronische Schaltkreis als so genanntes Funketikett ausgebildet sein, welches auch als RFID-Tag oder RFID Chip bezeichnet wird.

Die Schnittstelle kann kontaktbehaftet, kontaktlos oder als so genanntes Dual-Mode-Interface ausgebildet sein. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein. Die Kommunikation mit dem Lesegerät kann über ein RFID-Verfahren erfolgen.

Für den Zugriff auf die in dem integrierten elektronischen Schaltkreis des Dokuments gespeicherten Daten muss das Lesegerät zunächst den kryptographischen Schlüssel von dem Layout der Anzeigevorrichtung erfassen. Mit Hilfe dieses kryptographischen Schlüssels wird dann das kryptographische Protokoll ausgeführt. Die erfolgreiche Ausführung des kryptographischen Protokolls kann dann eine hinreichende oder notwendige Bedingung für ein Auslesen der Daten durch das Lesegerät sein. Ergänzend können weitere Sicherheitsvorkehrungen zum Schutz der Daten gegen unberechtigtes Auslesen vorgesehen sein, wie zum Beispiel nach einem Basic Access Control (BAC)- oder einem Extended Access Control (EAC)-Verfahren, wie es von der internationalen Luftfahrtbehörde (ICAO) spezifiziert ist.

In einem weiteren Aspekt betrifft die Erfindung ein Lesegerät zum Lesen eines Dokuments. Das Lesegerät hat optische Sensormittel zur Erfassung von Variationen des Layouts der Anzeigevorrichtung des Dokuments, also beispielsweise zur Erfassung von Variationen der räumlichen Anordnung, der Form und/oder der Größe der Anzeigeelemente der Anzeigevorrichtung. Das Lesegerät ist ferner zur Erfassung der über die Variationen des Layouts codierten Informationen ausgebildet.

Nach einer Ausführungsform hat das Lesegerät eine Schnittstelle zu einer entsprechenden Schnittstelle des Dokuments, insbesondere eine RFID-Schnittstelle. Ferner hat das Lesegerät Mittel zur Ausführung eines kryptographischen Protokolls. Ein Zugriff des Lesegeräts auf in dem Dokument gespeicherte Daten kann nur dann erfolgen, wenn das Lesegerät zuvor einen kryptographischen Schlüssel von der Anzeigevorrichtung optisch erfasst, um auf dieser Basis zusammen mit dem Dokument das kryptographische Protokoll auszuführen.

Nach einer weiter ausgestalteten Ausführungsform ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann zur Erfassung der in das Layout der Anzeigeelemente des elektronischen Kraftfahrzeugkennzeichens codierten Information ausgebildet sein.

In einem weiteren Aspekt betrifft die Erfindung ein Verfahren zur Verifikation eines Dokuments. Im Einzelnen sind dazu Schritte vorgesehen zur Erfassung der Information aus dem Layout der Anzeigeelemente und zur Überprüfung der Information mit Hilfe einer Referenzinformation, wobei das Dokument als verifiziert gilt, wenn die Überprüfung erfolgreich ist.

Nach einer weiter ausgestalteten Ausführungsform des Verfahrens handelt es sich bei der Referenzinformation um ein Referenzbild.

Nach einer noch weiter ausgestalteten Ausführungsform des Verfahrens handelt es sich bei der Referenzinformation um einen kryptographischen Schlüssel handelt.

Nach einer noch weiter ausgestalteten Ausführungsform des Verfahrens wird die Überprüfung durch einen Benutzer oder maschinell durch ein Lesegerät durchgeführt.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann zur Erfassung der in das Layout der Anzeigeelemente des elektronischen Kraftfahrzeugkennzeichens codierten Information ausgebildet sein.

Im Weiteren werden Ausführungsformen der Erfindung mit Bezugnahme auf die Zeichnungen näher erläutert. Es zeigen:
- Figur 1: ein Blockdiagramm einer ersten Ausführungsform einer erfindungsgemäßen Dokuments,
- Figur 2: eine Blockdiagramm einer zweiten Ausführungsform eines erfindungsgemäßen Dokuments,
- Figur 3: eine Ausführungsform der Anzeigevorrichtung des Dokuments mit einer Variation der geometrischen Formen der Anzeigeelemente,
- Figur 4: eine Ausführungsform der Anzeigevorrichtung des Dokuments mit einer Variation der geometrischen Formen der Ansteuerungselektroden der Anzeigeelemente,
- Figur 5: eine Ausführungsform der Anzeigevorrichtung des Dokuments mit einer Variation der Anordnungen der Anzeigeelemente zur Erzeugung eines Moire-Effekts,
- Figur 6: eine Ausführungsform der Anzeigevorrichtung des Dokuments mit einer Variation der Größen der Anzeigeelemente,
- Figur 7: eine Ausführungsform der Anzeigevorrichtung des Dokuments, wobei mehrere der Anzeigeelemente Ausnehmungen aufweisen,
- Figur 8: eine Ausführungsform der Anzeigevorrichtung des Dokuments, die zur farbigen Wiedergabe ausgebildet ist, mit einer Variation der Anordnung verschiedenfarbiger Anzeigeelemente,
- Figur 9: eine Ausführungsform der Anzeigevorrichtung des Dokuments, bei der benachbarte Anzeigeelemente elektrisch miteinander verbunden sind,
- Figur 10: ein Blockschaltbild der Anzeigevorrichtung der Figur 9.

Elemente der nachfolgenden Figuren, die einander entsprechen, sind jeweils mit denselben Bezugszeichen gekennzeichnet.

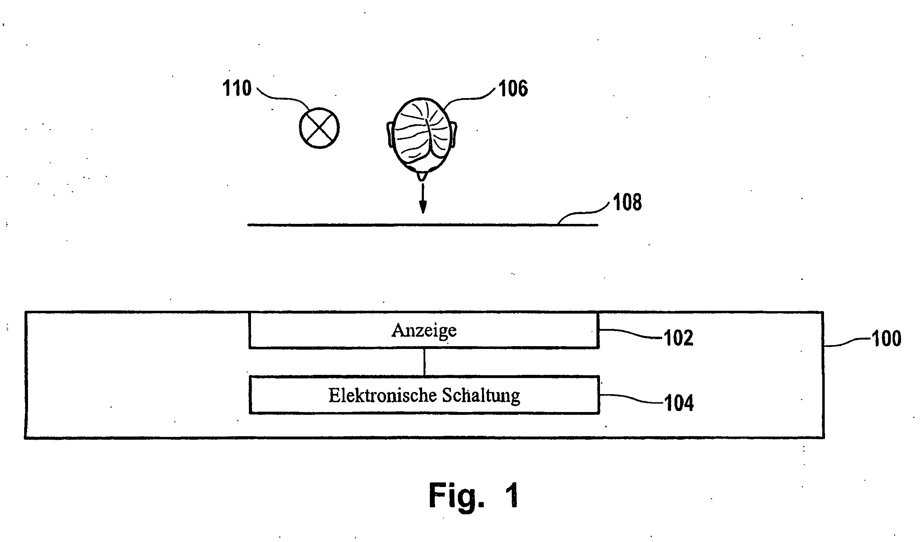

Die Figur 1 zeigt ein Dokument 100 mit einer in den Dokumentenkörper des Dokuments 100 integrierten Anzeige 102 und einer elektronischen Schaltung 104 zur Ansteuerung der Anzeige 102. Die Anzeige 102 beinhaltet eine Vielzahl von Anzeigeelementen, die matrixförmig angeordnet sind.

Das Layout der Anzeigeelemente hat lokale Variationen, durch die eine Information codiert ist. Solche lokale Variationen des Layouts können durch einen Benutzer 106 visuell wahrnehmbar sein. Nach Ausführungsformen der Erfindung ist eine visuelle Wahmehmung dieser Variation des Layouts durch den Benutzer 106 sowie eine Erfassung der Information nur mit Hilfe eines optischen Hilfsmittels 108 möglich. Bei dem optischen Hilfsmittel 108 kann es sich zum Beispiel um eine Lupe oder um ein Linienmuster handeln. Zur Betrachtung der Anzeige 102 kann eine externe Lichtquelle 110 erforderlich sein, insbesondere dann, wenn es sich bei der Anzeige 102 um eine reflektive Anzeige handelt, wie zum Beispiel eine elektrophoretische Anzeige. Auf das Hilfsmittel 108 kann - je nach Ausführungsform - verzichtet werden, wenn eine Manipulation insbesondere der dargestellten Bilddaten durch eine offensichtliche Falschdarstellung, zum Beispiel eine Falschfarbendarstellung, für den Betrachter offensichtlich ist.

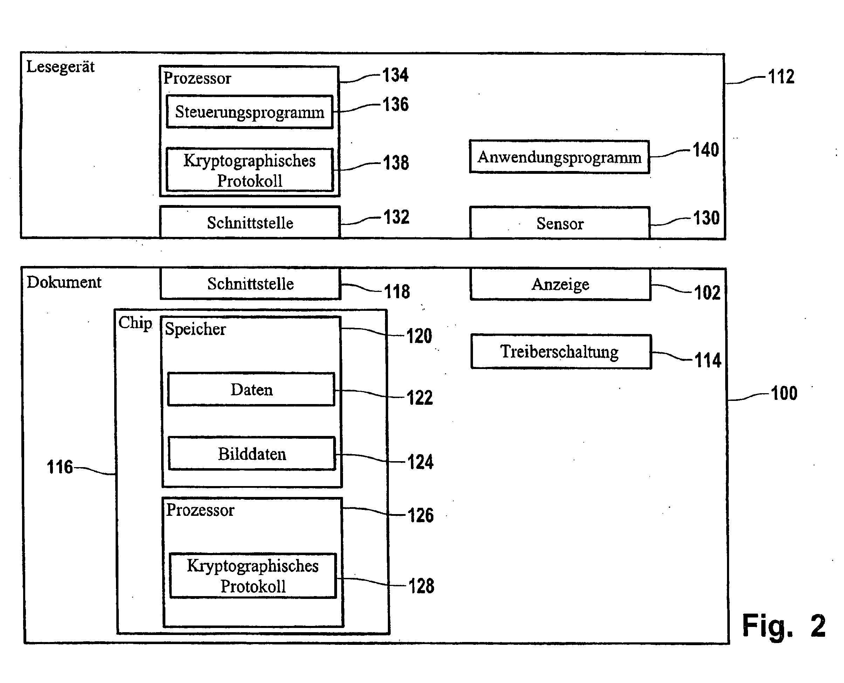

Die Figur 2 zeigt eine Ausführungsform des Dokuments 100, die so ausgebildet ist, dass die Information von der Anzeige 102 maschinell mit Hilfe eines Lesegeräts 112 erfasst werden kann.

Das Dokument 100 hat eine Treiberschaltung 114 zur Ansteuerung der Anzeige 102. Das Dokument 100 hat ferner einen Chip 116, der irisbesondere als RFID-Chip ausgebildet sein kann. Der Chip 116 ist mit einer Schnittstelle 118 zur Kommunikation mit dem Lesegerät 112 verbunden. Die Schnittstelle 118 kann beispielsweise ein oder mehrere Antennenwindungen aufweisen.

Der Chip 116 hat einen elektronischen Speicher 120 zur Speicherung von schutzbedürftigen Daten 122. Bei den Daten 122 kann es sich beispielsweise um biometrische Daten des Trägers des Dokuments 100, wie zum Beispiel Fingerabdruckdaten, Iris-Scan-Daten oder dergleichen handeln. Ferner sind in dem Speicher 120 Bilddaten 124 gespeichert, die zur Wiedergabe durch die Anzeige 102 vorgesehen sind. Bei den Bilddaten 124 kann es sich um ein oder mehrere Gesichtsbilder des Trägers des Dokuments, textuelle Informationen, einen Barcode oder dergleichen handeln.

Der Chip 116 hat ferner einen Prozessor 126 zur Ausführung von Programminstruktionen 128, durch die die das Dokument 100 betreffenden Schritte eines kryptographischen Protokolls implementiert werden.

Das Lesegerät 112 hat einen optischen Sensor 130 zur Erfassung des Layouts der Anzeigeelemente der Anzeige 102. Bei dem optischen Sensor 130 kann es sich um einen CCD-Sensor oder einen Scanner handeln.

Der Sensor 130 kann so ausgebildet sein, dass die Erfassung des Layouts der Anzeigeelemente mittelbar über die Erfassung eines über die Anzeigeelemente wiedergegebenen Bildes erfolgt oder durch unmittelbare Erfassung von Merkmalen des Layouts, wie zum Beispiel der Form, Größe und/oder Anordnung der Anzeigeelemente und/oder deren Ansteuerungselementen. Für die Erfassung solcher Merkmale des Layouts kann die Anzeige 102 eingeschaltet oder ausgeschaltet sein. Für eine Erfassung bei ausgeschalteter Anzeige 102 kann das Lesegerät 112 eine Strahlungsquelle zur Beleuchtung der Anzeige 102 aufweisen, sodass ein Bild der Oberfläche der Anzeigevorrichtung durch den optischen Sensor 130 erfasst werden kann.

Das Lesegerät 112 hat ferner eine Schnittstelle 132, die der Schnittstelle 118 des Dokuments entspricht. Beispielsweise ist also die Schnittstelle 132 für eine RFID-Kommunikation mit dem Dokument 100 bzw. dessen Chip 116 ausgebildet.

Das Lesegerät 112 hat zumindest einen Prozessor 134 zur Ausführung eines Steuerungsprogramms 136 sowie von Programminstruktionen 138, durch die die das Lesegerät 112 betreffenden Schritte des kryptographischen Protokolls implementiert werden. Das Lesegerät 112 kann ferner zur Ausführung eines Anwendungsprogramms 140 dienen. Das Anwendungsprogramm 140 kann auch von einem anderen Computersystem ausgeführt werden, welches mit dem Lesegerät 112 verbunden ist.

Die Anzeige 102 ist in der hier betrachteten Ausführungsform so ausgebildet, dass es sich bei der in dem Layout der Anzeigeelemente codierten Information um einen kryptographischen Schlüssel für die Durchführung des kryptographischen Protokolls handelt. Insbesondere kann es sich hierbei um einen symmetrischen oder um einen asymmetrischen kryptographischen Schlüssel handeln.

Zum Zugriff auf die Daten 122 erfasst das Lesegerät 112 zunächst mittels seines optischen Sensors 130 das Layout der Anzeigeelemente der Anzeige 102. Hierzu wird der Sensor 130 entsprechend von dem Steuerungsprogramm 136 angesteuert. Das Steuerungsprogramm 136 extrahiert die in dem Layout der Anzeigeelemente codierte Information. Beispielsweise kann die Codierung in Form eines digitalen Wasserzeichens, als Barcode oder dergleichen, vorliegen. Auf diese Art und Weise erhält das Steuerungsprogramm 136 Kenntnis des kryptographischen Schlüssels.

Das Steuerungsprogramm 136 startet daraufhin die Ausführung der Programminstruktionen 138, sodass das kryptographische Protokoll zwischen dem Lesegerät 112 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 112 zunächst eine Anforderung der Daten an die Schnittstelle 118 des Dokuments 100 sendet. Daraufhin wird die Ausführung der Programminstruktionen 128 gestartet. Hierdurch wird zum Beispiel eine Zufallszahl generiert, die mit einem Referenzwert des kryptographischen Schlüssels symmetrisch verschlüsselt wird, so dass ein Chiffrat resultiert. Die verschlüsselte Zufallszahl wird von der Schnittstelle 118 des Dokuments 100 an die Schnittstelle 132 des Lesegeräts 112 gesendet.

Durch Ausführung der Programminstruktionen 138 wird seitens des Lesegeräts das von dem Dokument 100 empfangene Chiffrat mit Hilfe des zuvor aus dem Layout der Anzeige 102 gewonnenen kryptographischen Schlüssels entschlüsselt. Das Resultat der Entschlüsselung wird von der Schnittstelle 132 an die Schnittstelle 118 des Lesegeräts 112 gesendet.

Mit Hilfe der Programminstruktionen 128 wird dann seitens des Dokuments 100 geprüft, ob das Ergebnis der Entschlüsselung des Chiffrats, welche das Dokument von dem Lesegerät 112 empfangenen hat, identisch ist mit der initial durch das Dokument 100 erzeugten Zufallszahl. Wenn dies der Fall ist, stimmt der Referenzwert des kryptographischen Schlüssels, der in den Programminstruktionen 128 beinhaltet ist, oder auf den diese zugreifen können, mit dem von dem Layout der Anzeigeelemente der Anzeige 102 durch das Lesegerät 112 erfassten kryptographischen Schlüssels überein, wodurch die Authentizität des Dokuments 100 und die Zugriffsberechtigung des Lesegeräts 112 gegeben ist.

Das Dokument 100 überträgt daraufhin die von dem Lesegerät 112 angeforderten Daten 122 von der Schnittstelle 118 zu der Schnittstelle 132. Diese Daten 122 können von dem Steuerungsprogramm 136 an das Anwendungsprogramm 140 für eine Weiterverarbeitung übertragen werden. Beispielsweise werden die Daten 122 auf einer Bildschirmmaske ausgegeben.

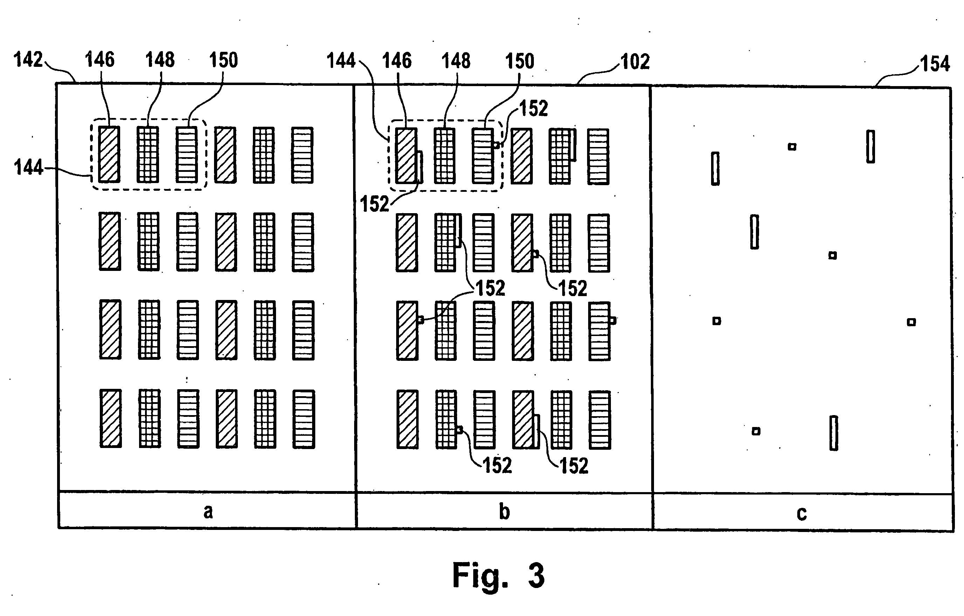

Die Figur 3a zeigt das Layout einer Anzeige 142, wobei jedes Bildelement 144 für eine farbliche Wiedergabe aus drei Anzeigeelementen 146, 148 und 150 der Farben Rot, Grün bzw. Blau steht. Die Anzeigeelemente der Bildelemente 144 sind in einer Matrix, bestehend aus Zeilen und Spalten, angeordnet und jeweils rechteckförmig.

Die Figur 3b zeigt eine Ausführungsform der Anzeige 102, die basierend auf der Anzeige 142 hergestellt worden ist.

Die Position und die Reihenfolge der einzelnen Anzeigeelemente 146, 148 und 150 ist bei der Anzeige 102 im Vergleich zu der Anzeige 142 unverändert. Aufgrund einer zusätzlich eingebrachten Struktur, bestehend aus verschiedenen Strukturelementen 152, variieren aber die geometrischen Formen einiger der Anzeigeelemente der Anzeige 102. Die Position und die Form der Strukturelemente 152 können dabei so gewählt sein, dass hierdurch ein zweidimensionaler Barcode in das Layout der Anzeigeelemente codiert wird. Diesen zweidimensionalen Barcode 154 zeigt die Figur 3c.

Den zweidimensionalen Barcode 154 erhält man in dem Differenzbild zwischen dem Layout der Anzeige 102 und der Anzeige 142. Beispielsweise kann das Layout der Anzeige 142 als Referenzbild in einem Lesegerät gespeichert sein. Das Layout der Anzeige 102 wird von dem Lesegerät (vgl. Lesegerät 112 der Figur 2) aufgenommen. Durch Subtraktion des Referenzbildes erhält das Lesegerät 112 so den Barcode 154, der decodiert werden kann, um beispielsweise den kryptographischen Schlüssel zu gewinnen.

Das Muster kann zum Beispiel bei der Herstellung der Anzeigematrix mit eingebracht werden, wodurch sich ein Muster und/oder Schlüssel ergibt, welches den Dokumententyp kennzeichnet und einen Austausch des Displays gegen ein handelsübliches verhindert. Das Muster kann aber auch drucktechnisch und individuell auf das Display aufgebracht sein.

Grundsätzlich lässt sich diese Art der Einbringung von zusätzlichen Informationen auch für einfarbige Anzeigen, die aus einzelnen Anzeigeelementen aufgebaut ist, verwenden.

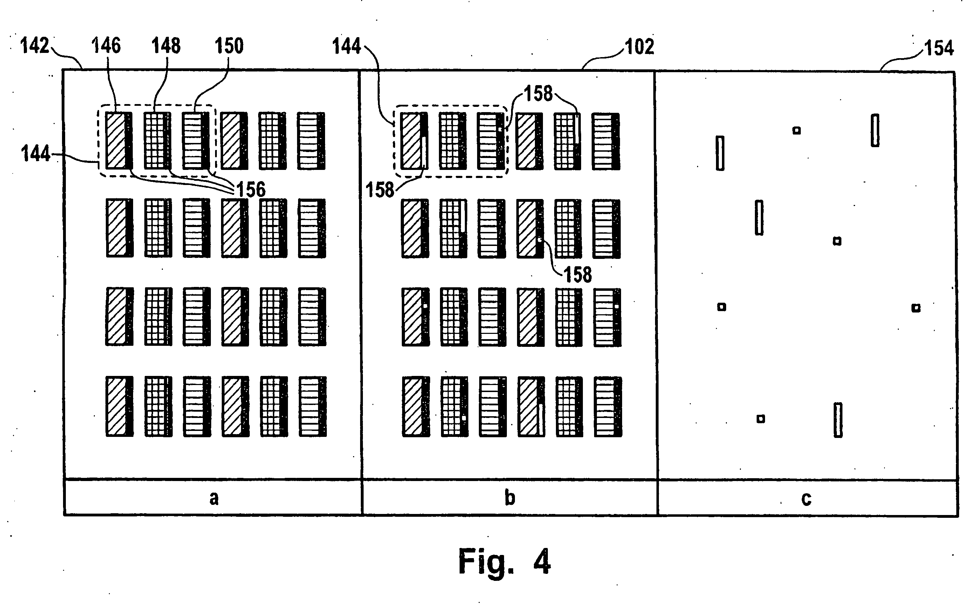

Die Figur 4 zeigt eine Ausführungsform der Standardanzeige 142, mit jeweils einer Ansteuerungselektrode 156 für jedes der Anzeigeelemente 146, 148, 150. Bei dieser Ausführungsform wird ausgehend von der Anzeige 142 die Anzeige 102 hergestellt, indem zumindest einige der Ansteuerungselektroden 156 strukturiert werden. Beispielsweise werden die Ansteuerungselektroden teilweise mittels Laserablation, UV-Bleichen oder dergleichen abgetragen, wodurch die Ausnehmungen 158, die in der Figur 4b als weiße Bereiche gezeigt sind, resultieren. Durch diese Strukturierung kann wiederum der Barcode 154 in das Layout eingebracht werden. In der Ausführungsform der Figur 3 erhält das Lesegerät den Barcode 154 im Differenzbild, welches durch Subtraktion des Layouts der Anzeige 102 von dem Layout der Anzeige 142 gewonnen wird. Grundsätzlich lässt sich diese Art der Einbringung von zusätzlichen Informationen auch für einfarbige Anzeigen, die aus einzelnen Anzeigeelementen aufgebaut ist, verwenden.

Bei der Ausführungsform der Figur 4 ist besonders vorteilhaft, dass die Einbringung der Information in das Layout der Anzeigeelemente zur Personalisierung der Anzeige 102 erfolgen kann. Beispielsweise handelt es sich bei der Information also um eine Personalisierungsinformation, wie zum Beispiel eine Seriennummer des Dokuments 100, persönliche Angaben zu dem Träger des Dokuments oder der ausstellenden Behörde, der Gültigkeit des Dokuments, biometrische Angaben des Trägers des Dokuments oder dergleichen.

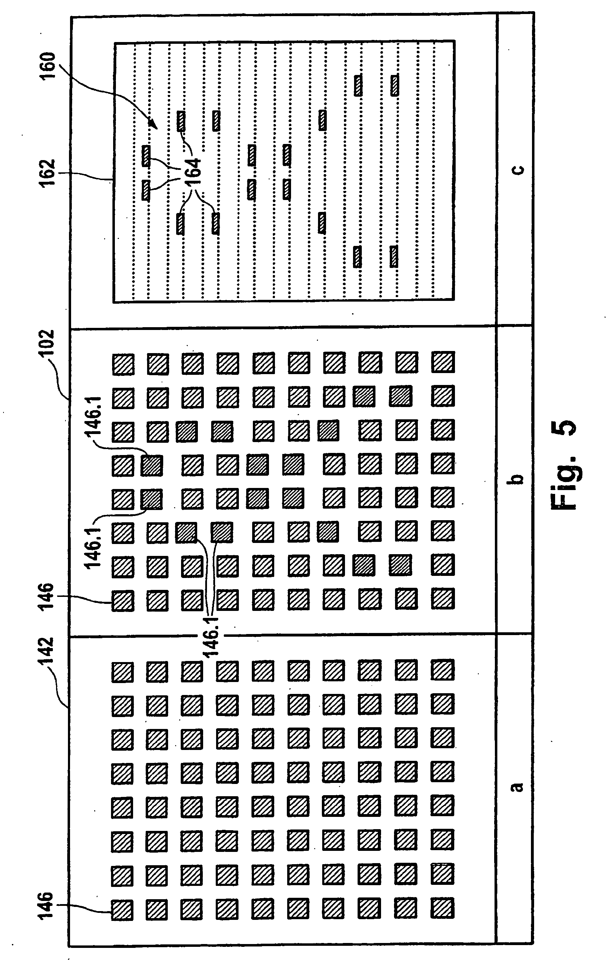

Die Figur 5 zeigt eine Ausführungsform der Anzeige 142, bestehend aus quadratischen Anzeigeelementen 146, die in einer Matrix aus Zeilen und Spalten angeordnet sind, wie es im Stand der Technik allgemein üblich. Die in der Figur 5b gezeigte Ausführungsform der Anzeige 102 unterscheidet sich von der Anzeige 142 dadurch, dass einige der Anzeigeelemente 146 von der Matrix abweichend angeordnet sind. Diese Abweichung von der Matrix ist dadurch gegeben, dass einige der Anzeigeelemente 146.1 in Spaltenrichtung nach oben hin um ca. die halbe Breite eines Anzeigeelementes 146 nach oben versetzt angeordnet sind.

Durch diese von der Matrix deplatzierte Anordnung dieser Anzeigeelemente 146.1 ist ein Symbol 160 in dem Layout codiert, welches beispielsweise durch den Moire-Effekt sichtbar gemacht werden kann. Hierzu wird - wie in der Figur 5c gezeigt - ein Linienraster 162 auf die Anzeigevorrichtung 102 gelegt, sodass jeweils nur die über die vorgegebenen Zeilen der Matrix hinausragenden Abschnitte 164 der deplatzierten Anzeigeelemente 146.1 sichtbar sind. Durch diese sichtbaren Abschnitte 164 wird ein Symbol 160 gebildet. Das Linienraster 162 kann zur Visualisierung des Symbols 160 für einen Benutzer 106 so eingesetzt werden, wie es für das optische Hilfsmittel 108 in der Figur 1 gezeigt ist. Vorteil ist die einfache Verifikation.

Bei dem Symbol 160 kann es sich zum Beispiel um ein Wappen, Siegel oder ein Logo des Herausgebers des Dokuments 100 handeln. Im Falle der drucktechnischen Herstellung des Displays kann es sich auch um eine individualisierte Information, zum Beispiel ein Foto, handeln.

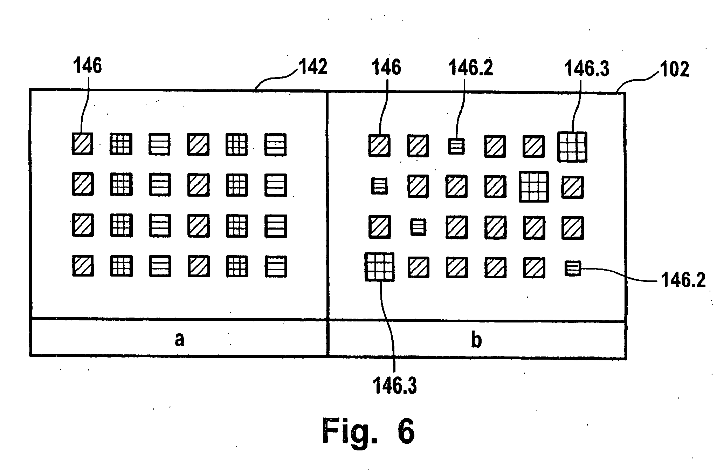

Die Figur 6a zeigt eine Ausführungsform der Anzeige 142, bestehend aus einer Matrix quadratischer Anzeigeelemente 146. Die in der Figur 6b gezeigte Ausführungsform der Anzeige 102 unterscheidet sich von der Anzeige 142 dadurch, dass einige der Anzeigeelemente 146 hinsichtlich ihrer Form variieren.

Beispielsweise gibt es neben den Anzeigeelementen 146 kleinere Anzeigeelemente 146.2, die nur ca. die halbe Fläche der Anzeigeelemente 146 aufweisen, also ca. 70% von deren Kantenlänge haben. Ferner gibt es Anzeigeelemente 146.3, die eine im Vergleich zu den Standardanzeigeelementen 146 in etwa doppelt so große Fläche einnehmen, also ca. 141% von deren Kantenlängen aufweisen. Diese unterschiedlich großen Flächen der Anzeigeelemente 146, 146.2 und 146.3 der Anzeige 102 sowie die räumliche Verteilung dieser verschieden großen Anzeigeelemente kann durch ein Lesegerät optisch sensiert werden. Durch die Anordnung der verschieden großen Anzeigeelemente in der Ebene der Anzeige 102 kann eine Information in das Layout der Anzeige 102 codiert werden, zum Beispiel in Form eines digitalen Wasserzeichens, eines Barcodes oder dergleichen.

Vorzugsweise werden für die Anzeige 102 Anzeigeelemente 146, 146.2, 146.3 verwendet, deren Helligkeit moduliert werden kann. Beispielsweise handelt es sich bei den Anzeigeelementen 146,146.2 und 146.3 um OLEDs.

Um eine ortsabhängige Helligkeit der Anzeige 102 aufgrund der unterschiedlich großen Anzeigeelemente zu vermeiden, kann so vorgegangen werden, dass die einzelnen Anzeigeelemente 146, 146.2 und 146.3 jeweils mit einem Strom beaufschlagt werden, der die Strahlungsleistung eines einzelnen der Anzeigeelemente 146, 146.2 und 146.3 unabhängig von der jeweiligen Größe festlegt.

Der maximal zulässige Strom wird durch die kleinflächigen Anzeigeelemente 146.2 bestimmt, wobei dieser maximale Strom so gewählt sein muss, dass die Anzeigeelemente 146.2 nicht zerstört werden. Die Beaufschlagung der Anzeigeelemente 146, 146.2 und 146.3 mit den so gewählten Strömen kann schaltungstechnisch oder softwaretechnisch durch die Treiberschaltung (vgl. Treiberschaltung 114 der Figur 2) erfolgen.

Nach einer weiteren Ausführungsform der Erfindung wird die lokale Helligkeitsschwankung der Anzeige 102 aufgrund der verschieden großen Anzeigeelemente dadurch kompensiert, dass ein auf der Anzeige 102 wiedergegebenes Bild entsprechend transformiert worden ist. Eine solche Transformation ist dergestalt, dass für Anzeigeelemente 146.3, die eine größere Helligkeit aufweisen, eine Bildinformation in den Bilddaten vorhanden ist, die aufgrund der Bildtransformation einen geringeren Helligkeitswert als den ursprünglichen angibt. Durch die Ansteuerung der Anzeigeelemente 146.3 mit dem geringeren Helligkeitswert folgt also im Ergebnis eine korrekte Wiedergabe der Helligkeit des ursprünglichen Bildes und zwar ohne dass Kompensationsmassnahmen auf schaltungstechnischer Ebene erforderlich sind. Entsprechend verhält es sich für die kleineren Anzeigeelemente 146.2, die eine geringere Helligkeit aufweisen; diese müssen mit transformierten Bildinformationen angesteuert werden, die einen höheren Helligkeitswert aufweisen, als die ursprünglichen Bilddaten.

Hierdurch ist eine zusätzliche Sicherheit gegen Manipulationen gegeben. Werden beispielsweise manipulierte Bilddaten 124 in dem Speicher 120 gespeichert (vgl. die Ausführungsform der Figur 2), die nicht hinsichtlich ihrer Helligkeitswerte transformiert sind, so wird die Manipulation sofort augenfällig, wenn diese nicht transformierten Bilddaten auf der Anzeige 102 in der Ausführungsform der Figur 6b angezeigt werden, da nämlich die Helligkeit des wiedergegebenen Bildes aufgrund der unterschiedlichen Größen der Anzeigeelemente lokal unterschiedlich ist.

Beispielsweise kann auch so vorgegangen werden, dass das Lesegerät 112 (vgl. Figur 2) Bilddaten 124 an das Dokument 100 sendet. Das entsprechende Bild wird dann auf der Anzeige 102 wiedergeben. Wenn es sich bei den Bilddaten 124 um transformierte Bilddaten handelt, so wird das Bild auf der Anzeige 102 korrekt wiedergegeben, was auf die Authentizität der Anzeige 102 schließen lässt.

Das Lesegerät kann auch nicht transformierte Bilddaten 124 zur Wiedergabe durch die Anzeige 102 an das Dokument 100 senden. Dann gibt die Anzeige 102 ein Bild mit durch die unterschiedliche Größe der Anzeigeelemente bedingten lokalen Verfälschungen der Helligkeitswerte wieder. Dieses Bild wird mit Hilfe des Sensors 130 sensiert und mit den ursprünglich von dem Lesegerät 112 an das Dokument 100 gesendeten Bilddaten 124 verglichen. Aus diesem Vergleich, insbesondere einem Differenzbild, kann die in das Layout der Anzeige 102 codierte Information und so gegebenenfalls ein kryptografischer Schlüssel durch das Lesegerät 112 gewonnen werden.

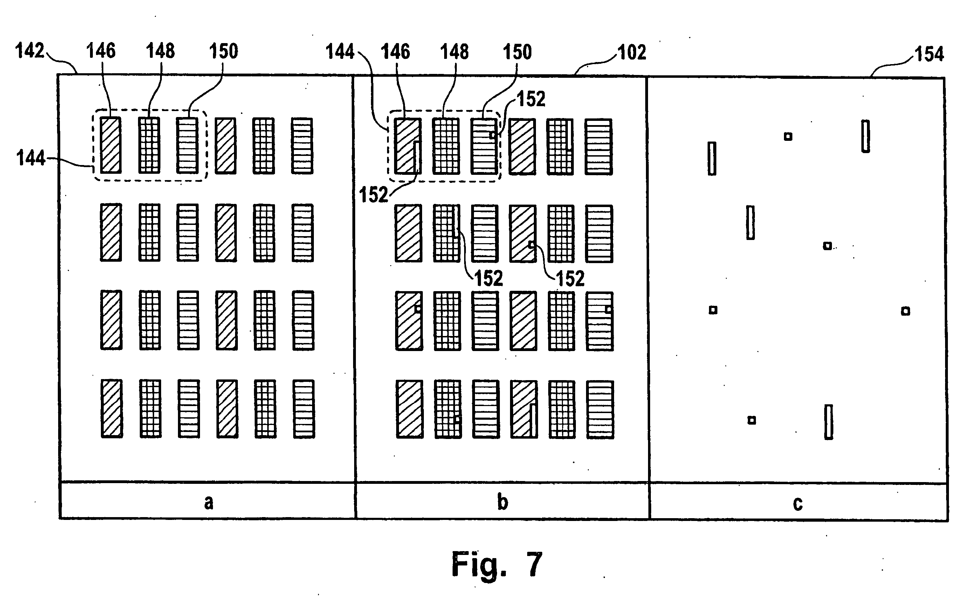

Die Figur 7a zeigt eine Ausführungsform der Anzeige 142. Hierbei kann es sich um eine handelsübliche RGB Anzeige handeln. Die Figur 7b zeigt eine Ausführungsform der Anzeige 102, die durch Strukturierung der Anzeige 142 hergestellt wird, wobei die Strukturierung der Ausführungsform der Figur 3b entspricht. Im Unterschied zu der Ausführungsform der Figur 3b werden die Strukturelement 152 aber nach der Ausführungsform der Figur 7b nicht zusätzlich aufgebracht, sondern sie werden von den Anzeigeelementen abgetragen, wie zum Beispiel mittels Laserablation. Dies hat den Vorteil, dass die Strukturierung der Anzeige 102 mit Hilfe der Strukturelemente 152 zur Einbringung von Personalisierungsinformationen erfolgen kann.

Durch die teilweise Abtragung der Anzeigeelemente 146, zum Beispiel mittels Laserablation, resultieren in der Ausführungsform der Figur 7b Anzeigeelemente 146, 148 und 150, die drei verschiedene Größen aufweisen können, nämlich eine Größe von 100% ohne Abtragung, eine Größe von beispielsweise ca. 90% mit einem geringen Grad der Abtragung und eine Größe von beispielsweise ca. 75% bei einem höheren Grad der Abtragung. Die aufgrund der unterschiedlichen Größen resultierenden verschiedenen Helligkeiten der Anzeigeelemente können wiederum, wie mit Bezugnahme auf die Figur 6 erläutert, schaltungstechnisch, durch Bleichen der größeren Anzeigeelemente, wie z.B. durch Beaufschlagung mit UV Strahlung, oder durch eine Transformation der Bilddaten kompensiert werden.

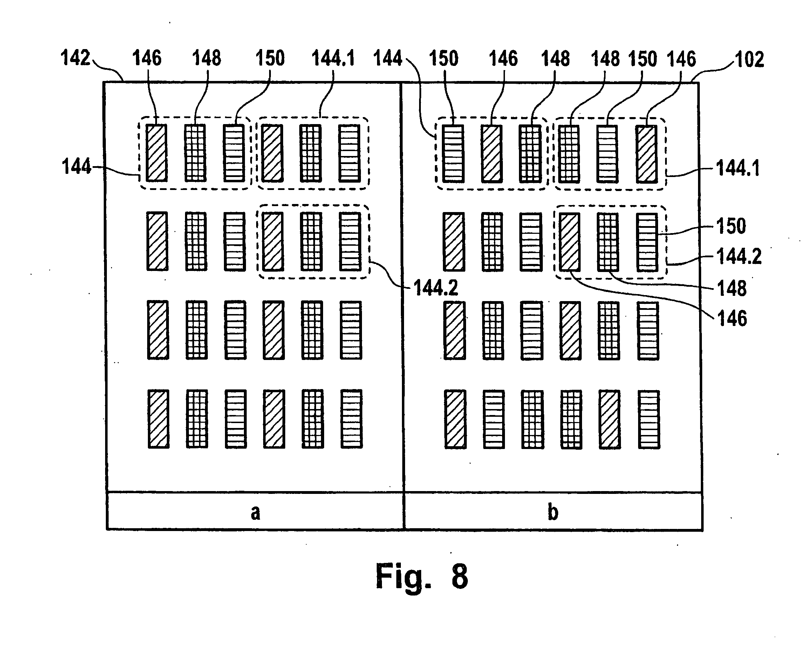

Die Figur 8a zeigt eine Ausführungsform der Anzeige 142 entsprechend der Ausführungsform der Figur 3a. Die erfindungsgemäße Anzeige 102 unterscheidet sich gegenüber der Anzeige 142 dadurch, dass die Reihenfolge der Anzeigeelemente 146, 148,150, die zu demselben Bildelement 144 gehören, variiert.

Bei der Standardanzeige 142 ist nämlich diese Reihenfolge, wie im Stand der Technik allgemein üblich, für sämtliche der Bildelemente 144 ,144.1, 144.2 etc. identisch, d.h. die Anzeigeelemente 146, 148 und 150 sind immer in der Reihenfolge Rot (R), Grün (G) und Blau (B) angeordnet. Im Gegensatz dazu, ist diese Reihenfolge bei dem Bildelement 144 der Anzeigevorrichtung 102 BRG, bei dem Bildelement 144.1 GBR und bei dem Bildelement 144.2 RGB, etc.

Durch die Variation der Reihenfolge der verschiedenfarbigen Anzeigeelemente eines Bildelements wird hier also Information in das Layout codiert.

Beispielsweise können die Anzeigeelemente derselben Farbe verschiedener der Bildelemente 144 zu einem bestimmten Muster angeordnet sein. In der hier betrachteten Ausführungsform bilden die grünen Anzeigeelemente 148 beispielsweise ein kreisförmiges Gebilde. Die Treiberschaltung 114 (vgl. Figur 2) kann nun so ausgebildet sein, dass in einem ersten Betriebsmodus nur die grünen Pixel der Anzeige 102 angesteuert werden, sodass das kreisförmige Gebilde auf der Anzeige 102 erscheint, sodass die in das Layout der Anzeigeelemente codierte Information visualisiert wird.

In einem zweiten Betriebsmodus steuert die Treiberschaltung 114 die Anzeige 102 zur Wiedergabe der Bilddaten 124 an. Für eine korrekte Bildwiedergabe müssen die Bilddaten auf die Variationen der Anordnung der verschiedenfarbigen Anzeigeelemente einer der Bildelemente angepasst sein. Herkömmliche RGB-Bilddaten werden dagegen von der Anzeige 102 in einer Falschfarben-Darstellung visualisiert, da die lokalen Veränderungen in der Reihenfolge der Anzeigeelemente in konventionellen RGB-Bilddaten 124 nicht berücksichtigt sind. Hierdurch ist ein zusätzlicher Schutz gegen Manipulationen gegeben, da ein Austausch der Originalbilddaten 124 durch RGB-Bilddaten nicht möglich ist, ohne dass dies aufgrund der Falschfarben-Darstellung bei der Wiedergabe dieser Bilddaten auf der Anzeige 102 augenfällig ist.

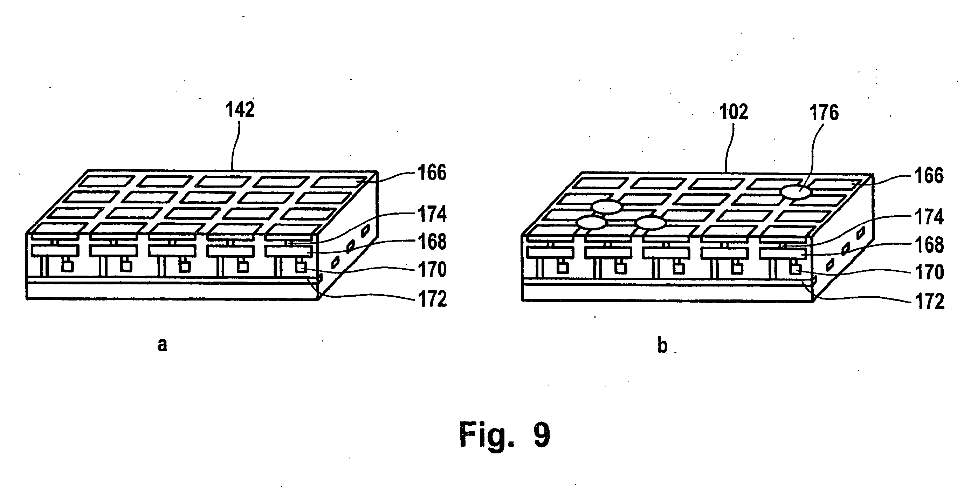

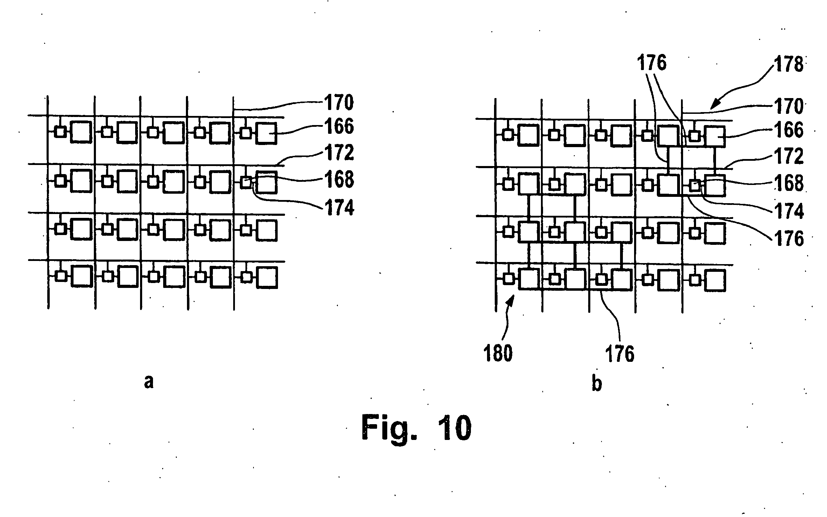

Die Figur 9a zeigt eine perspektivische Ansicht einer Ausführungsform der Anzeige 142. Die Anzeige 142 hat für jedes ihrer Anzeigeelemente eine Steuerelektrode 116. Die Steuerelektroden 116 sind matrixförmig angeordnet. Bei der Anzeige 142 handelt es sich um eine Aktiv-Matrix-Anzeige, d.h. jedem der Anzeigeelemente ist eine Aktivierungsschaltung 168 zugeordnet. Jede der Steuerelektroden 166 ist mit der dazugehörigen Aktivierungsschaltung 168 über einen elektrischen Kontakt 174 verbunden. An jede der Aktivierungsschaltungen 168 sind Leiterbahnen für die Zeilenansteuerung 170 und die Spaltenansteuerung 172 angeschlossen. Die Figur 10a zeigt ein entsprechendes Schaltbild.

Von der Anzeige 142 unterscheidet sich die erfindungsgemäße Anzeige 102 der Figur 9b dadurch, dass zwei oder mehrere der Anzeigeelemente elektrisch miteinander verbunden sind, und zwar durch die Verbindungen 176. Aufgrund der elektrischen Verbindung mehrerer Anzeigeelemente werden diese zu einem einzigen Anzeigeelement zusammengefasst, welches nur insgesamt ansteuerbar ist, da sich die betreffenden Steuerelektroden 166 aufgrund der Verbindungen 176 auf demselben Potenzial befinden.

Die Verbindungen 176 können drucktechnisch mittels leitfähigen Farben auf die Anzeige 142 aufgebracht werden, um hierdurch die Anzeige 102 herzustellen. Beispielsweise kann die drucktechnische Aufbringung mittels Verfahren des Hoch-, Flach-, Tief-, Durch- oder Digitaldrucks erfolgen.

In einer weiteren Ausführungsform sind diese Verbindungen 176 im Display enthalten und werden selektiv zerstört.

Die Figur 10b zeigt das entsprechende Blockschaltbild. Wie aus der Figur 10b ersichtlich, werden durch die Verbindungen 176 zwei Gruppen 178 und 180 von Anzeigeelementen geschaffen. Die Gruppe 176 beinhaltet vier Anzeigeelemente, wohingegen die Gruppe 180 acht Anzeigeelemente beinhaltet. Durch jede der Gruppen 176 und 180 wird ein neues Anzeigeelement gebildet, welches jeweils nur insgesamt von der Treiberschaltung ansteuerbar ist, da sich ja sämtliche Anzeigeelemente der jeweiligen Gruppe auf demselben elektrischen Potenzial befinden.

Wie in der Figur 9b gezeigt, wird durch jeden Druckpunkt eine der Verbindungen 176 geschaffen, die dann vier benachbarte Anzeigeelemente bzw. deren Steuerelektroden 166 miteinander kontaktiert. Ist die Druckauflösung deutlich höher als die Strukturgröße der Steuerelektroden 166, so können durch einen Druckpunkt jeweils zwei benachbarte Steuerelektroden miteinander verbunden werden; ist dagegen die Druckauflösung sehr viel geringer als die Struktur der Steuerelektroden 166, so werden jeweils eine größere Anzahl von Steuerelektroden 166 durch jeden Druckpunkt verbunden.

Beispielsweise erfolgt die Aufbringung der Verbindungen 176 während der Herstellung der Anzeige 102, sodass eine spätere zerstörungsfreie Veränderung des durch die Verbindungen 176 realisierten Layouts der Anzeigeelemente nicht mehr möglich ist.

Hinsichtlich der Ausbildung der Treiberschaltung 114 (vgl. Figur 2) kann eine Anpassung dahingehend erfolgen, dass der durch die Aktivierungsschaltung 166 in die miteinander zu einer Gruppe verbundenen Anzeigeelementen eingespeiste Strom so erhöht wird, dass sämtliche Elemente der Gruppe mit der gewünschten Helligkeit und nicht nur einer reduzierten Helligkeit leuchten, wobei dies für den Fall einer emissiven Ausbildung der Anzeige 102 gilt.

Analog gilt dieses auch für den Fall einer elektrophoretischen Ausbildung der Anzeige 102, wobei es durch die verschiedene Größe der Anzeigeelemente zu einer unterschiedlich starken Ausrichtung der elektrophoretischen Partikel im Feld und somit zu unterschiedlichen Grauwerten kommen kann. Auch dieses kann ansteuerungstechnisch in der Treiberschaltung 114 durch eine entsprechende Variation der Pulsfolge kompensiert werden.

### Bezugszeichenliste

- 100: Dokument
- 102: Anzeige
- 104: elektronische Schaltung
- 106: Benutzer
- 108: optisches Hilfsmittel
- 110: Lichtquelle
- 112: Lesegerät
- 114: Treiberschaltung
- 116: Chip
- 118: Schnittstelle
- 120: Speicher
- 122: Daten
- 124: Bilddaten
- 126: Prozessor
- 128: Programminstruktionen
- 130: optischer Sensor
- 132: Schnittstelle
- 132: Prozessor
- 136: Steuerungsprogramm
- 138: Programminstruktionen
- 140: Anwendungsprogramm
- 142: Anzeige
- 144: Bildelement
- 146: Anzeigeelement
- 148: Anzeigeelement
- 150: Anzeigeelement
- 152: Strukturelement
- 154: Barcode
- 156: Ansteuerungselektronik
- 158: Ausnehmung
- 160: Symbol
- 162: Linienraster
- 164: Abschnitt
- 166: Steuerelektrode
- 168: Aktivierungsschaltung
- 170: Zeilenansteuerung
- 172: Spaltenansteuerung
- 174: Kontakt
- 176: Verbindung
- 178: Gruppe
- 180: Gruppe

## Patentansprüche

1. Dokument mit einer integrierten Anzeigevorrichtung (102), die mehrere ansteuerbare Anzeigeelemente (146, 148, 150) beinhaltet, wobei die Anzeigevorrichtung matrixförmig aufgebaut ist, **dadurch gekennzeichnet, dass** durch das Layout der Anzeigeelemente eine Information codiert ist, die durch Abweichungen der Anordnung der Anzeigeelemente von der Matrix codiert ist.

2. Dokument nach Anspruch 1, wobei das Layout eine Variation der räumlichen Anordnung der Anzeigeelemente beinhaltet, durch die die Information codiert ist.

3. Dokument nach Anspruch 2, wobei die räumliche Anordnung der Anzeigeelemente in der Ebene der Anzeigevorrichtung variiert und/oder wobei die räumliche Anordnung der Anzeigeelemente senkrecht zu der Ebene der Anzeigevorrichtung variiert.

4. Dokument nach einem der vorhergehenden Ansprüche, wobei jeder Bildpunkt der Anzeigevorrichtung durch erste, zweite und dritte Anzeigeelemente gebildet wird, die jeweils eine andere Farbe aufweisen, und wobei das Layout der Anzeigeelemente so ausgebildet ist, dass die Reihenfolge der Anordnung der ersten, zweiten und dritten Anzeigeelemente für verschiedene der Bildpunkte variiert.

5. Dokument nach einem der vorhergehenden Ansprüche, wobei das Layout eine Variation der Größe der Anzeigeelemente beinhaltet, mit einem integrierten elektronischen Schaltkreis (104; 114, 116) zur Ansteuerung der Anzeigevorrichtung, wobei der integrierte elektronische Schaltkreis Mittel zur Kompensation von Helligkeitsunterschieden der Anzeigeelemente aufgrund deren unterschiedlicher Größen aufweist.

6. Dokument nach Anspruch 8 oder 9, mit einem Datenspeicher (124) zur Speicherung von Bilddaten für eine Wiedergabe durch die Anzeigevorrichtung, wobei die Bilddaten zur Kompensation der Helligkeitsunterschiede der Anzeigeelemente aufgrund deren unterschiedlichen Größen transformiert sind.

7. Dokument nach einem der vorhergehenden Ansprüche, wobei ein oder mehrere Bildelemente der Anzeigevorrichtung durch eine elektrische Verbindung (176) von zumindest zwei benachbarten der Anzeigeelemente gebildet werden, wobei durch die Zusammenfassung von benachbarten Anzeigeelementen zu jeweils einem Bildelement Information codiert ist.

8. Dokument nach einem der vorhergehenden Ansprüche, wobei das Layout eine Variation der Geometrie der Ansteuerungselemente (156) der Anzeigeelemente beinhaltet.

9. Dokument nach Anspruch 8, wobei zumindest einige der Ansteuerungselemente Ausnehmungen (158) aufweisen und/oder wobei Teilbereiche zumindest einiger der Anzeigeelemente Ausnehmungen (152, 158) aufweisen.

10. Dokument nach einem der vorhergehenden Ansprüche, wobei das Layout ein digitales Wasserzeichen beinhaltet, durch welches Information codiert wird.

11. Dokument nach einem der vorhergehenden Ansprüche, wobei das Layout einen Barcode beinhaltet, durch welchen die Information codiert ist.

12. Dokument nach einem der vorhergehenden Ansprüche, wobei die codierte Information visuell von der Anzeigevorrichtung nicht erfassbar ist.

13. Dokument nach einem der vorhergehenden Ansprüche, wobei es sich bei der Information um eine Personalisierungsinformation handelt und/oder wobei es sich bei der Information um ein Sicherheitsmerkmal handelt und/oder wobei es sich bei der Information um einen kryptographischen Schlüssel handelt.

14. Dokument nach Anspruch 13, wobei das Dokument einen integrierten elektronischen Schaltkreis (116) mit einem Speicher (120) zur Speicherung von Daten (122) und mit Mitteln (128) zur Ausführung eines kryptographischen Protokolls beinhaltet, und mit einer Schnittstelle (118) zu einem Lesegerät (112), wobei ein Zugriff des Lesegeräts auf die Daten über die Schnittstelle die Ausführung des kryptographischen Protokolls mit Hilfe des kryptographischen Schlüssels voraussetzt.

15. Lesegerät für ein Dokument nach einem der vorhergehenden Ansprüche, mit
- optischen Sensormitteln (130) zur Erfassung des Layouts der Anzeigeelemente des Dokuments,
- Mitteln (136) zur Dekodierung der in dem Layout codierten Information.

16. Verfahren zur Verifikation eines Dokumentes nach einem der Ansprüche 1 bis 15 mit folgenden Schritten:
- Erfassung der Information aus dem Layout der Anzeigeelemente,
- Überprüfung der Information mit Hilfe einer Referenzinformation,
wobei das Dokument als Verifiziert gilt, wenn die Überprüfung erfolgreich ist und/ oder wobei es sich bei der Referenzinformation um ein Referenzbild handelt und/oder wobei es sich bei der Referenzinformation um einen kryptographischen Schlüssel handelt.

## Claims

1. A document, comprising an integrated display apparatus (102), which contains a plurality of activatable display elements (146, 148, 150), wherein the display apparatus is constructed in a matrix-like manner, **characterised in that** an item of information is coded by the layout of the display elements and is coded by deviations of the arrangement of the display elements from the matrix.

2. The document according to Claim 1, wherein the layout contains a variation of the spatial arrangement of the display elements, by means of which the information is coded.

3. The document according to Claim 2, wherein the spatial arrangement of the display elements in the plane of the display apparatus varies, and/or wherein the spatial arrangement of the display elements caries perpendicularly to the plane of the display apparatus.

4. The document according to one of the preceding claims, wherein each pixel of the display apparatus is formed by first, second and third display elements, which each have a different colour, and wherein the layout of the display elements is formed such that the order of the arrangement of the first, second and third display elements caries for different pixels.

5. The document according to one of the preceding claims, wherein the layout contains a variation of the size of the display elements, with an integrated electronic circuit (104; 114; 116) for activating the display apparatus, wherein the integrated electronic circuit comprises means for compensating for differences in brightness between the display elements due to the different sizes thereof.

6. The document according to Claim 8 or 9, comprising a data memory (124) for storing image data for a reproduction by the display apparatus, wherein the image data is transformed for compensation of the differences in brightness between the display elements due to the different sizes thereof.

7. The document according to one of the preceding claims, wherein one or more image elements of the display apparatus is/are formed by an electric connection (176) of at least two adjacent display elements, wherein an item of information is coded by the combination of adjacent display elements to form an image element in each case.

8. The document according to one of the preceding claims, wherein the layout contains a variation of the geometry of the activation elements (156) of the display elements.

9. The document according to Claim 8, wherein at least some of the activation elements have recesses (158), and/or wherein sub-regions of at least some of the display elements have recesses (152, 158).

10. The document according to one of the preceding claims, wherein the layout contains a digital watermark, by means of which information is coded.

11. The document according to one of the preceding claims, wherein the layout contains a barcode, by means of which the information is coded.

12. The document according to one of the preceding claims, wherein the coded information cannot be captured visually by the display apparatus.

13. The document according to one of the preceding claims, wherein the information is a piece of personalised information, and/or wherein the information is a security feature, and/or wherein the information is a cryptographic key.

14. The document according to Claim 13, wherein the document contains an integrated electronic circuit (116) comprising a memory (120) for storing data (122) and comprising means (128) for executing a cryptographic protocol, and comprising an interface (118) to a reader (112), wherein access by the reader to the data via the interface presupposes the execution of the cryptographic protocol with the aid of the cryptographic key.

15. A reader for a document according to one of the preceding claims, comprising
- optical sensor means (130) for capturing the layout of the display elements of the document,
- means (136) for decoding the information coded in the layout.

16. A method for verifying a document according to one of Claims 1 to 15, comprising the following steps:
- capturing the information form the layout of the display elements,
- inspecting the information with the aid of reference information
wherein the document is deemed to be verified when the inspection is successful, and/or wherein the reference information is a reference image, and/or wherein the reference information is a cryptographic key.

## Revendications

1. Document avec un dispositif d'affichage intégré (102) comprenant plusieurs éléments d'affichage commandables (146, 148, 150), dans lequel le dispositif d'affichage est construit en forme de matrice, **caractérisé en ce que** la présentation des éléments d'affichage permet de coder une information, laquelle est codée par des écarts de l'agencement des éléments d'affichage par rapport à la matrice.

2. Document selon la revendication 1, dans lequel la présentation contient une variation de l'agencement spatial des éléments d'affichage, par laquelle l'information est codée.

3. Document selon la revendication 2, dans lequel l'agencement spatial des éléments d'affichage varie dans le plan du dispositif d'affichage, et/ou dans lequel l'agencement spatial des éléments d'affichage varie perpendiculairement au plan du dispositif d'affichage.

4. Document selon l'une des revendications précédentes, dans lequel chaque pixel du dispositif d'affichage est formé par des premiers, deuxièmes et troisièmes éléments d'affichage, lesquels comportent respectivement une autre couleur, et dans lequel la présentation des éléments d'affichage est conçue de manière à ce que l'ordre de l'agencement des patrons de réception de conteneurs, deuxièmes et troisièmes éléments d'affichage varie pour différents pixels.

5. Document selon l'une des revendications précédentes, dans lequel la présentation contient une variation de la taille des éléments d'affichage, avec un circuit électronique intégré (104 ; 114, 116) pour l'activation du dispositif d'affichage, dans lequel le circuit électronique intégré comporte des moyens pour la compensation des différences de luminosité des éléments d'affichage en raison de leurs différentes tailles.

6. Document selon la revendication 8 ou 9, avec une mémoire (124) pour le stockage de données d'image, pour une reproduction par le dispositif d'affichage, dans lequel les données d'image sont transformées pour compenser les différences de luminosité des éléments d'affichage en raison de leurs différentes tailles.

7. Document selon l'une des revendications précédentes, dans lequel un ou plusieurs éléments d'image du dispositif d'affichage sont formés par un raccordement électrique (176) d'au moins deux éléments d'affichage adjacents, dans lequel une information est codée par le regroupement d'éléments d'affichage adjacents respectivement en un élément d'image.

8. Document selon l'une des revendications précédentes, dans lequel la présentation contient une variation de la géométrie des éléments d'activation (156) des éléments d'affichage.

9. Document selon la revendication 8, dans lequel au moins quelques-uns des éléments d'activation comportent des évidements (158) et/ou dans lequel des régions partielles d'au moins quelques-uns des éléments d'affichage comportent des évidements (152, 158).

10. Document selon l'une des revendications précédentes, dans lequel la présentation contient un filigrane numérique, permettant de coder l'information.

11. Document selon l'une des revendications précédentes, dans lequel la présentation contient un code barres permettant de coder l'information.

12. Document selon l'une des revendications précédentes, dans lequel l'information codée ne peut être détectée visuellement par le dispositif d'affichage.

13. Document selon l'une des revendications précédentes, dans lequel l'information est une information de personnalisation et/ou dans lequel l'information est une caractéristique de sécurité et/ou dans lequel l'information est une clé cryptographique.

14. Document selon la revendication 13, dans lequel le document contient un circuit électronique intégré (116) avec une mémoire (120) pour le stockage de données (122) et avec des moyens (128) pour l'exécution d'un protocole cryptographique, et avec une interface (118) vers un dispositif de lecture (112), dans lequel un accès du dispositif de lecture aux données par le biais de l'interface présuppose l'exécution du protocole cryptographique à l'aide de la clé cryptographique.

15. Dispositif de lecture pour un document selon l'une des revendications précédentes, avec
- des capteurs optiques (130) pour la détection de la présentation des éléments d'affichage du document,
- des moyens (136) pour le décodage de l'information codée dans la présentation.

16. Procédé pour la vérification d'un document selon l'une des revendications 1 à 15, avec les étapes suivantes :
- détection de l'information à partir de la présentation des éléments d'affichage,
- vérification de l'information à l'aide d'une information de référence,
dans lequel le document est considéré comme vérifié lorsque la vérification est réussie et/ou dans lequel l'information de référence est une image de référence et/ou dans lequel l'information de référence est une clé cryptographique.
